(19) Europäisches Patentamt / European Patent Office / Office européen des brevets

(11) **EP 3 522 053 B1**

(12) **FASCICULE DE BREVET EUROPEEN**

(45) Date de publication et mention
de la délivrance du brevet:
**31.03.2021 Bulletin 2021/13**

(51) Int Cl.:
***G06F 21/32*** *(2013.01)*

(21) Numéro de dépôt: **19155210.8**

(22) Date de dépôt: **04.02.2019**

(54) **PROCÉDÉ D'AUTHENTIFICATION D'UN VISAGE**

AUTHENTIFIZIERUNGSVERFAHREN EINES GESICHTS

METHOD FOR AUTHENTICATING A FACE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **06.02.2018 FR 1850967**

(43) Date de publication de la demande:
**07.08.2019 Bulletin 2019/32**

(73) Titulaire: **Idemia Identity & Security France
92400 Courbevoie (FR)**

(72) Inventeurs:
• **DOUBLET, Julien
92400 COURBEVOIE (FR)**
• **BEAUDET, Jean
92400 COURBEVOIE (FR)**

(74) Mandataire: **Regimbeau
20, rue de Chazelles
75847 Paris Cedex 17 (FR)**

(56) Documents cités:
**WO-A1-2017/100929      US-A1- 2017 124 385
US-B1- 8 457 367**

• **Pengqing Xie: "Facial movement based human
user authentication", Master thesis, Iowa state
university, 31 décembre 2014 (2014-12-31),
XP055498087, ISBN: 978-1-321-59309-9 Extrait de
l'Internet:
URL:https://lib.dr.iastate.edu/cgi/viewcon
tent.cgi?referer=https://www.google.com/&h
ttpsredir=1&article=5274&context=etd [extrait le
2018-08-07]**

**Description**

CONTEXTE ET ARRIERE-PLAN TECHNOLOGIQUE

La présente invention appartient au domaine de la biométrie, et porte plus précisément sur un procédé d'authentification d'un visage.

Certains procédés d'identification ou de vérification d'identité nécessite d'acquérir une image du visage de la personne souhaitant se prévaloir d'une identité. Il peut s'agir par exemple de procédés biométriques d'identification, basés sur l'analyse d'éléments du visage pour procéder à une identification. Il peut s'agir également de comparer le visage de la personne avec des photographies l'identifiant, notamment lors de la soumission de documents d'identité tels qu'un passeport. Enfin, des procédés de contrôle d'accès basés sur la reconnaissance faciale ont récemment fait leur apparition, notamment pour déverrouiller un téléphone portable intelligent, comme dans le brevet US9477829.

Or, la mise en œuvre de ces procédés requiert de se prémunir contre des fraudes consistant à présenter à l'imageur acquérant l'image du visage une reproduction du visage, telle qu'une photographie. A cet effet ont été développés des procédés pour authentifier le visage, c'est-à-dire pour détecter d'éventuelles fraudes. La plupart de ces procédés repose sur l'analyse d'un mouvement imposé, ce qu'on appelle généralement un défi. Ainsi, il est demandé par exemple à la personne dont le visage est présenté à l'imageur d'effectuer des actions précises telles que cligner des yeux, sourire ou hocher la tête. Toutefois, de tels procédés se sont révélés vulnérables à des fraudes basées sur la présentation de vidéos dans lesquelles un visage effectue le défi demandé.

La demande de brevet US 2017/0124385 A1 décrit un procédé d'authentification d'un utilisateur basé sur un défi, c'est-à-dire que l'utilisateur doit exécuter une séquence de mouvement imposés. Plus précisément, le système demande à l'utilisateur de se tenir d'abord dans une position de repos face caméra, où il acquiert une première signature du visage, puis lui demande de se tourner pour acquérir une seconde signature du visage. L'authentification se fait en comparant les signatures pour détecter une incohérence représentative d'une fraude. La robustesse à la fraude d'une telle approche n'est cependant pas parfaite.

PRESENTATION DE L'INVENTION

L'invention a pour but de remédier au moins en partie à ces inconvénients et préférentiellement à tous, et vise notamment à proposer un procédé d'authentification d'un visage présenté à un terminal permettant de détecter les fraudes, qui soit à la fois simple, robuste, et efficace contre la présentation de vidéos.

A cet effet, il est proposé un procédé d'authentification d'un visage présenté à un terminal comprenant un imageur, un écran et une unité de traitement, comprenant les étapes dans lesquelles :

- l'imageur acquiert au moins une image initiale d'un visage présenté dans son champ d'acquisition,
- l'unité de traitement détermine une pose du visage à partir de l'image initiale, et à partir de cette pose du visage détermine une pose de référence, une pose du visage étant définie par au moins deux angles représentatifs de l'orientation du visage apparaissant dans une image, et une position cible placée aléatoirement ou pseudo-aléatoirement dans un espace cible à distance d'une position de référence correspondant à la pose de référence, ladite position cible correspondant à une pose cible,
- l'écran affiche une image affichée comprenant au moins un repère visuel d'orientation initialement à la position de référence déterminée à partir de la pose du visage dans l'image initiale, et une cible visuelle à la position cible,
- l'unité de traitement détermine une pose du visage dans chaque image de la pluralité d'images successives,
- l'imageur acquiert un flux d'images du visage présenté dans son champ d'acquisition, et pour une pluralité d'images successives dudit flux d'images :

    - l'unité de traitement détermine des positions successives du repère visuel d'orientation en fonction des poses du visage successives par rapport à la pose de référence dans la pluralité d'images successives,
    - l'image affichée par l'écran est mise à jour en déplaçant le repère visuel d'orientation selon ses positions successives déterminées en fonction des poses du visage successives par rapport à la pose de référence dans la pluralité d'images successives,

- l'unité de traitement authentifie le visage présenté lorsqu'à la suite du déplacement du repère visuel d'orientation, il y a coïncidence de la position du repère visuel d'orientation et de la position cible où se trouve la cible visuelle, correspondant à une coïncidence de la pose du visage et de la pose cible, sinon le visage présenté dans le champ d'acquisition est considéré comme une fraude.

Le procédé est avantageusement complété par les caractéristiques suivantes, prises seules ou en quelconque de leurs combinaisons techniquement possibles :

- l'espace cible s'étend de part et d'autre de la position de référence ;
- l'espace cible correspond à des plages angulaires des angles de pose définissant une pluralité de positions cibles possibles ;
- les angles représentatifs de l'orientation du visage apparaissant dans l'image comprennent un angle de lacet autour d'un axe vertical et un angle d'assiette autour d'un axe horizontal, les plages angulaires s'étendant entre $\pm 10°$ et $\pm 20°$ par rapport aux angles de la pose de référence ;
- l'unité de traitement définit l'espace cible également en fonction de données d'utilisateur et/ou d'éléments contenu dans l'image initiale ;
- un temps est imparti à l'expiration duquel, en l'absence de coïncidence entre la position du repère visuel d'orientation et la position cible où se trouve la cible visuelle, sinon le visage présenté dans le champ d'acquisition est considéré comme une fraude ;
- la coïncidence entre la position du repère visuel d'orientation et la position cible où se trouve la cible visuelle nécessite d'être maintenue pendant une durée prédéterminée avant que l'unité de traitement authentifie le visage ;
- lorsque l'unité de traitement détermine une pose de référence, l'unité de traitement transmet un ordre de mouvement du visage si la pose du visage ne correspond pas à une vue de face du visage ;
- l'authentification du visage présenté est également conditionnée par la détermination de l'aspect tridimensionnel du visage présenté en mettant en œuvre une technique de reconstruction photogrammétrique basée sur le mouvement à partir d'au moins deux images du visage du flux d'image correspondant à deux poses différentes ;
- l'unité de traitement détermine pour la pluralité d'images successives du flux d'images, une direction du regard du visage en identifiant l'orientation des yeux dudit visage sur les images acquises, l'authentification du visage présenté est également conditionnée à un regard en direction du repère visuel d'orientation et/ou de la cible visuelle.

L'invention concerne également un produit programme d'ordinateur comprenant des instructions de code de programme enregistrées sur un support non transitoire utilisable dans un ordinateur pour l'exécution des étapes d'un procédé selon l'invention lorsque ledit programme est exécuté sur un ordinateur utilisant ledit support non transitoire.

L'invention concerne enfin un terminal comprenant un imageur, un écran et une unité de traitement, ledit terminal étant configuré pour mettre en œuvre un procédé selon l'invention.

## PRESENTATION DES FIGURES

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels :

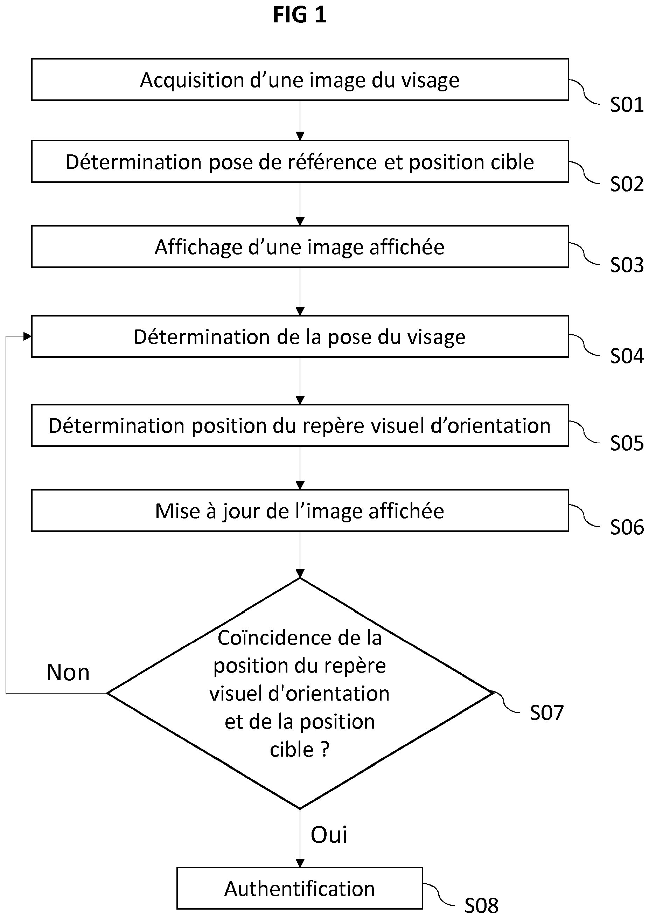

- la figure 1 montre un schéma de principe d'étapes mises en œuvre dans le procédé d'authentification,
- la figure 2 montre de façon schématique une personne présentant son visage à un terminal lors de la mise en œuvre du procédé,
- la figure 3 montre schématiquement les angles définissant la pose d'un visage,
- les figures 4a et 4b montrent des exemples schématiques d'images affichées lors d'une authentification réussie, le visage présenté étant considéré comme un visage authentique,
- les figures 5a et 5b montrent des exemples schématiques d'images affichées lors d'une authentification ratée, le visage présenté étant considéré comme une fraude.

## DESCRIPTION DETAILLEE

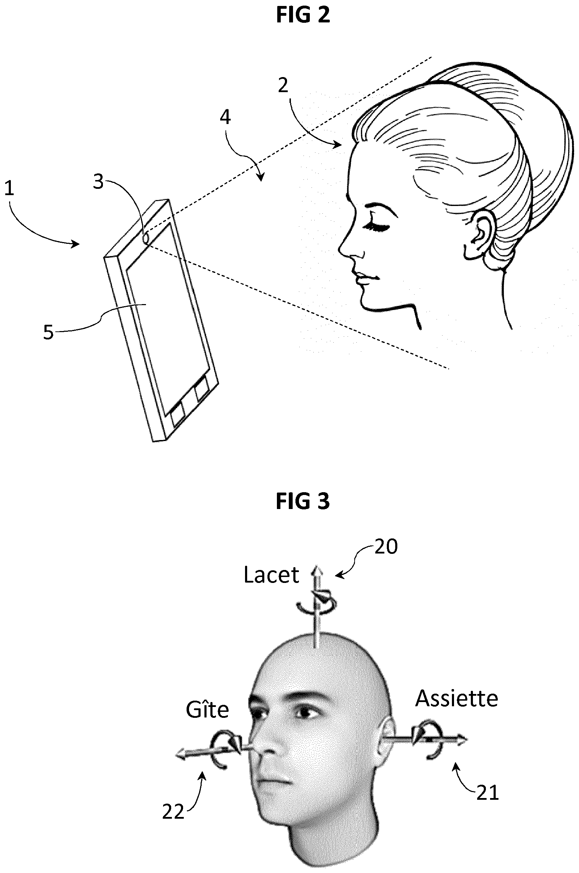

En référence à la figure 2, le procédé d'authentification est mis en œuvre au moyen d'un terminal 1 auquel un visage 2 d'un utilisateur est présenté. Le terminal 1 comprend une unité de traitement, un imageur 3 adapté pour acquérir des images d'objets présentés dans son champ d'acquisition 4, et un écran 5 capable d'afficher des images à l'utilisateur. Plus précisément, le terminal 1 est configuré de sorte que l'utilisateur puisse simultanément présenter son visage 2 dans le champ d'acquisition 4 de l'imageur 3, et regarder l'écran 5. Le terminal 1 peut ainsi être par exemple un terminal de poche type "smartphone", qui présente typiquement une configuration adéquate entre l'imageur 3 et l'écran 5. Le terminal 1 peut néanmoins être tout type de terminal informatisé, et peut en particulier être une borne fixe dédiée aux contrôles d'identité, par exemple installée dans un aéroport. L'unité de traitement comprend au moins un processeur et une mémoire, et permet d'exécuter un programme informatique pour la mise en œuvre du procédé.

L'utilisateur présente son visage 2 dans le champ d'acquisition 4 de l'imageur 3. L'imageur 3 acquiert au moins une image initiale du visage 2 (étape S01). A partir de l'image du visage, l'unité de traitement détermine une pose du visage, c'est-à-dire son orientation. Ainsi qu'illustré sur la figure 3, l'orientation du visage peut être décrite par trois angle traduisant des rotations autour d'axes définis par la configuration commune des visages. En effet, un visage comporte un bas (en direction du cou), un haut (le front/les cheveux), une face où sont visibles entièrement la bouche et les yeux, et deux côtés où se trouvent les oreilles. Les différents éléments composant un visage se répartissent selon des critères géométriques évidents dans une vue de face : la bouche est en dessous du nez, les yeux sont sur une même ligne horizontale, les oreilles sont également sur une même ligne horizontale, les sourcils sont au-dessus des yeux, etc....

Il est donc aisé de définir pour le visage, à partir de son image, une orientation par rapport au terminal 1 basée sur la rotation du visage autour d'un axe vertical, et d'au moins un axe horizontal. La figure 3 montre un exemple typique de repérage de l'orientation d'un visage en fonction de trois angles autour de trois axes orthogonaux : un angle de lacet autour d'un axe vertical 20, un angle d'assiette autour d'un premier axe horizontal 21, et un angle de gîte autour d'un second axe horizontal 22. S'agissant de visages, on utilise généralement la terminologie anglaise correspondante : "yaw" pour l'angle de lacet, "pitch" pour l'angle d'assiette, et "roll" pour l'angle de gîte. La rotation autour de l'axe vertical 20 correspond à la rotation de la tête de gauche à droite. Le premier axe horizontal 21 correspond à un axe horizontal autour duquel tourne la tête lors d'un hochement de tête. Le second axe horizontal 22 correspond à un axe horizontal compris dans un plan de symétrie du visage, coupant le nez et la bouche et séparant les yeux. La rotation autour de ce second axe horizontal 22 correspond à un penchement de tête à gauche ou à droite.

Si l'on peut utiliser les trois angles pour définir la pose, l'angle de gîte peut cependant ne pas être utilisé, en raison de la faible amplitude de rotation d'un visage dans cette direction, et de l'inconfort que cette rotation peut procurer. La pose peut donc être définie par au moins deux angles représentatifs de l'orientation du visage apparaissant dans l'image, qui sont de préférence l'angle de lacet et l'angle d'assiette.

Il existe de nombreuses méthodes connues permettant d'estimer la pose d'un visage à partir d'une ou plusieurs images de ce visage. On peut par exemple utiliser une méthode d'estimation de pose basée sur un apprentissage profond mis en œuvre au moyen d'un réseau de neurone déconvolutionnel. L'article "Head Pose Estimation in the Wild using Convolutional Neural Networks and Adaptive Gradient Methods" par M. Patacchiola et A. Cangelosi, Pattern Récognition vol.71, novembre 2017, pages 132-143, présente un exemple de méthode pouvant être mise en œuvre pour déterminer la pose du visage.

Une fois la pose du visage déterminée à partir de l'image du visage, l'unité de traitement détermine une pose de référence (étape S02). Cette pose de référence sera par la suite utilisée en tant que référence pour les poses du visage. Cette pose de référence peut correspondre directement à la pose du visage. De préférence toutefois, la pose de référence doit répondre à certaines caractéristiques, et en particulier présenter le visage suffisamment de face pour permettre une bonne application du procédé d'authentification, et éventuellement du procédé d'identification. Ainsi, lorsque l'unité de traitement détermine une pose de référence, l'unité de traitement transmet un ordre de mouvement du visage si la pose du visage ne correspond pas à une vue de face du visage. On considère ici que la vue de face implique des angles de lacet et d'assiette inférieurs à 5° par rapport à un alignement exact du second axe horizontal 22 (i.e. l'axe du nez), avec la direction de prise de vue. L'ordre de mouvement est communiqué à l'utilisateur par tout moyen, comme par exemple par l'affichage sur l'écran 5 d'un texte de consigne demandant à l'utilisateur de se placer face à l'imageur 3, ou un message audio.

A cette pose de référence correspond une position de référence, qui sera utilisée par la suite comme référence de position. Pour des raisons de simplicité, il est possible de définir la position de référence comme étant une position centrale. De fait, la position de référence est de préférence prédéterminée et immuable. Il est cependant possible de prévoir de définir la position de référence en fonction du contenu de l'image initiale acquise, par exemple pour la faire correspondre avec un élément du visage. L'unité de traitement détermine également une position cible.

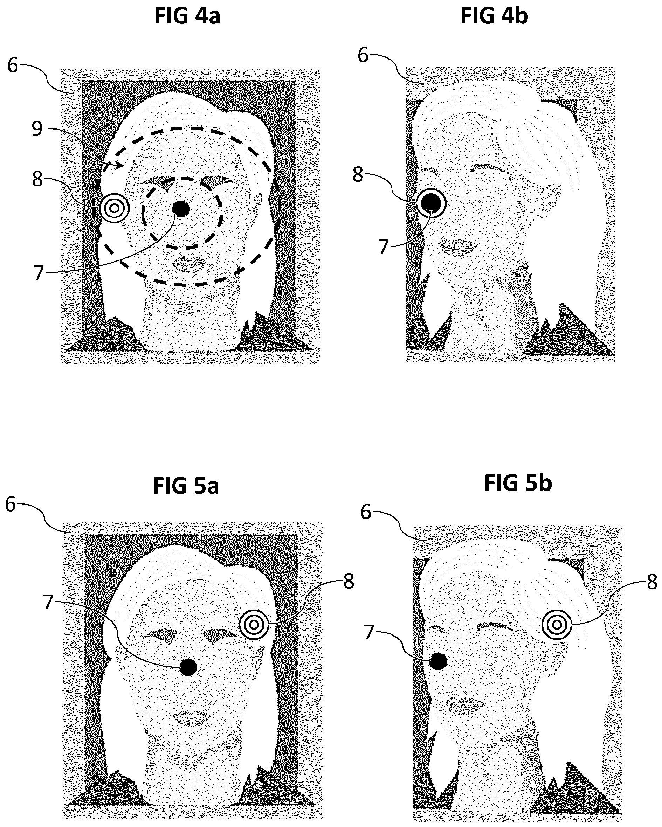

L'écran 5 affiche une image affichée comprenant au moins un repère visuel d'orientation initialement à la position de référence, et une cible visuelle à la position cible (étape S03). La figure 4a montre un exemple d'une telle image affichée 6. Ainsi qu'illustré, l'image affichée 6 comporte de préférence la représentation du visage précédemment acquise par l'imageur 3. On y retrouve un repère visuel d'orientation 7 figuré ici par un cercle noir. D'autres formes, motifs ou couleurs peuvent être envisagées. Par exemple, s'il est souhaité d'exploiter l'angle de gîte, il est préférable d'utiliser alors un repère visuel d'orientation 7 présentant une asymétrie par une rotation quelconque, par exemple un repère visuel d'orientation 7 présentant un motif tel qu'une croix ou une forme carrée, afin que le changement de gîte du visage 2 puisse être traduit par une rotation du repère visuel d'orientation 7 qui soit visuellement perceptible. Dans le cas illustré, la position de référence où se trouve initialement le repère visuel d'orientation 7 est au centre de l'image.

On trouve également la cible visuelle 8, ici représentée par trois cercles concentriques, placée à une position cible. La position cible, et donc cette cible visuelle 8, est placée aléatoirement ou pseudo-aléatoirement dans un espace cible à distance de la position de référence. On a représenté sur la figure 4a un exemple d'espace cible 9, figuré par deux ovales concentriques en pointillés centrés sur la position de référence. Bien d'autre espaces cibles sont possible. Il est à noter que l'espace cible n'apparaît pas dans l'image affichée 6 qu'affiche l'écran 5, et que cette représentation n'est donnée qu'à fin d'illustration. L'espace cible 9 représente l'ensemble des positions cibles possibles.

Cet espace cible 9 correspond à des plages angulaires des angles de pose définissant une pluralité de positions cibles possibles. Il y a en effet une équivalence entre les angles de pose et les positions dans l'image affichée 6. Cette équivalence peut être interprétée comme un changement de repère. Ainsi, en notant X et Y les coordonnées d'une position dans l'image affichée, on peut exprimer X et Y en fonction des angles de lacet et d'assiette, en considérant la position de référence au centre de l'image et la pose de référence comme présentant des angles de lacet et d'assiette nuls :

$$\begin{cases} X = \dfrac{k_1 \times angle\ lacet}{90} \times largeur\ d'image + \dfrac{largeur\ d'image}{2} \\ Y = \dfrac{k_2 \times angle\ d'assiette}{90} \times hauteur\ d'image + \dfrac{hauteur\ d'image}{2} \end{cases}$$

avec $k_1$ et $k_2$ des facteurs d'amplification, qui peuvent être égaux, et les angles en degrés. Il s'agit d'un exemple non limitatif, d'autres formules peuvent être utilisées, par exemple avec des angles en radians, des angles maximums (ici de $\pm 90°$) différents, ou une position de référence non centrée. Il est même possible d'utiliser des formules non linéaires.

Il y a bijection entre une position sur l'image affichée et une pose du visage. Ainsi, la position cible correspond à une pose cible. Il est d'ailleurs possible que l'unité de traitement détermine une pose cible dans un espace cible 9 (cet fois angulaire), et en déduise une position cible. L'utilisateur devra modifier la pose de son visage 2 pour qu'elle corresponde à la pose cible. En raison du lien entre une position dans l'image et une pose du visage, il est préférable de restreindre les positions cibles possibles à des poses cibles pouvant confortablement être réalisées par un utilisateur, c'est-à-dire de restreindre les plages angulaires auxquelles correspond l'espace cible 9. De plus, il est préférable de restreindre les positions cibles possibles à des poses cibles requérant un changement de pose suffisamment important, c'est-à-dire une position cible à distance de la position de référence. Par conséquent, les plages angulaires définissant l'espace cible 9 s'étendent de préférence entre $\pm 10°$ et $\pm 20°$ par rapport aux angles de la pose de référence, au moins pour les deux angles utilisés (angle de lacet et angle d'assiette). De préférence, l'espace cible 9 s'étend de part et d'autre de la position de référence, par exemple à droite et à gauche, et non pas d'un seul côté.

Il est possible que l'unité de traitement définisse l'espace cible 9 également en fonction de données d'utilisateur et/ou d'éléments contenu dans l'image, par exemple en restreignant l'espace cible 9. Il est par exemple possible de modifier l'emplacement ou l'étendue de l'espace cible 9 en fonction de la disposition du visage dans l'image initiale. Il est également possible d'adapter l'espace cible 9 pour prendre en compte des caractéristiques physiques de l'utilisateur, telles que sa taille, son âge ou un éventuel handicap. L'espace cible 9 étant de préférence défini par rapport à la position de référence, il est possible de modifier l'espace cible 9 par le déplacement de la position de référence, qui peut également être placée en fonction de données d'utilisateur et/ou d'éléments contenu dans l'image.

L'espace cible 9 présente une continuité au moins par morceaux, c'est-à-dire qu'il recouvre une ou plusieurs étendues sur l'image affichée 6. Il existe donc un grand nombre de positions cibles possibles, au moins plus de 100, voire plus de 1000. En fait, la continuité de l'espace cible 9 recouvre une quasi-infinité de positions cibles possibles. Comme la position cible est placée aléatoirement ou pseudo-aléatoirement dans l'espace cible 9, la position cible change à chaque fois que le procédé est mis en œuvre. Il n'est donc pas possible à un fraudeur de prévoir à l'avance où se trouvera la position cible, ni de prévoir toutes les positions cibles possibles. Il en résulte qu'il est inopérant de présenter à l'imageur 3 une vidéo représentant un visage prenant des poses cibles basées sur des mises en œuvre précédentes du procédé, puisque la position cible varie entre chaque itération du procédé.

Après que l'image affichée 6 est apparue sur l'écran 5, l'utilisateur doit faire coïncider la position du repère visuel d'orientation 7 et la position cible, en déplaçant le repère visuel d'orientation 7 jusqu'à la cible visuelle 8. Pour ce faire, l'utilisateur modifie la pose de son visage, modification reflétée par le déplacement du repère visuel d'orientation 7. L'imageur 3 acquiert alors un flux d'images du visage 2 présenté dans son champ d'acquisition 4, et l'unité de traitement analyse une pluralité d'images successives dudit flux d'images afin de mettre à jour l'image affichée 6 pour rendre compte du déplacement du repère visuel d'orientation 7 reflétant les modifications de la pose du visage 2.

Ainsi, pour chacune des images successives, l'unité de traitement détermine la pose du visage apparaissant dans l'image (étape S04). La pose du visage est déterminée par rapport à la pose de référence. A partir de la pose du visage, l'unité de traitement détermine une position actualisée du repère visuel d'orientation 7 dans l'image affichée 6 (étape S05). L'image affichée 6 par l'écran 3 est mise à jour en déplaçant le repère visuel d'orientation selon sa position actualisée (étape S06). Ainsi qu'illustré, il est préférable d'afficher également chaque image successive acquise, afin que l'utilisateur puisse voir son visage sur l'écran 5. Le flux d'image correspond de fait à une vidéo, et la réitération de la procédure suit la fréquence d'image de la vidéo.

Cette procédure est réitérée tant que des conditions d'authentification ou de détection de fraude ne sont pas réunies. A chaque image ou à certains intervalles de temps, l'unité de traitement vérifie des conditions d'authentification ou de détection de fraude sont réunies. En particulier, l'unité de traitement vérifie s'il y a coïncidence de la position du repère visuel d'orientation et de la position cible (étape S07), ce qui correspond à une coïncidence de la pose du visage et de la pose cible. Il est bien entendu que la coïncidence doit être entendue avec un intervalle de tolérance autour de la position cible, il ne serait pas raisonnable d'exiger une tolérance au pixel près. De préférence, la cible visuelle 8 présente une certaine surface, et il est considéré qu'il y a coïncidence lorsque le repère visuel d'orientation 7, ou au moins une partie de celui-ci, recouvre au moins une partie de la surface de la cible visuelle 8. Préférentiellement, il est requis que l'ensemble du repère visuel d'orientation 7 recouvre au moins une partie de la surface de la cible visuelle 8. C'est le cas de figure illustré par la figure 4b.

Lorsqu'il y a coïncidence de la position du repère visuel d'orientation et de la position cible, l'unité de traitement authentifie le visage présenté 2 comme correspondant à un visage authentique, c'est-à-dire n'étant pas une fraude. Toutefois, si cette coïncidence est une condition nécessaire, elle n'est de préférence pas suffisante. Il est préférable de rajouter des critères de stabilité et de temps conditionnant l'authentification du visage. En tant qu'exemple de critère de stabilité, on peut prévoir que la coïncidence de la position du repère visuel d'orientation et de la position cible nécessite d'être maintenue pendant une durée prédéterminée avant que l'unité de traitement authentifie le visage présenté 2. Une telle durée prédéterminée peut par exemple être supérieure à 0,5 seconde, et de préférence être supérieure à 1 seconde, voire à 1,5 ou 2 secondes. Ainsi, une fraude basée sur la présentation d'une vidéo où un visage effectuerait rapidement différentes poses dans l'espoir que l'une d'elles corresponde à la pose cible ne serait pas efficace, puisque tenir chaque pose pendant la durée prédéterminée serait trop long. Par ailleurs, on se prémunit ainsi contre une coïncidence accidentelle qui surviendrait transitoirement lors d'un mouvement du visage présenté lorsque la position cible se trouverait sur le trajet du repère visuel d'orientation 7.

L'authentification du visage peut également être conditionnée par la détermination de l'aspect tridimensionnel du visage présenté 2 en mettant en œuvre une technique de reconstruction photogrammétrique basée sur le mouvement à partir d'au moins deux images du visage du flux d'image correspondant à deux poses différentes. On peut notamment mettre en œuvre une technique de cartographie et localisation simultanées, ou SLAM, de l'anglais "simultaneous localization and mapping". D'autres conditions peuvent résulter de la mise en œuvre de différentes méthodes de détection de fraude, notamment pour détecter des artefacts frauduleux tel qu'une détection de moiré, représentatif de l'aspect artificiel du visage présenté 2.

La direction du regard peut également permettre d'améliorer les modalités d'authentification du visage. Typiquement si le regard n'est pas dirigé vers le repère visuel d'orientation 7 ou la cible visuelle 8, le visage peut être considéré comme frauduleux. En effet, afin de déplacer le repère visuel d'orientation 7, il est nécessaire à l'utilisateur d'une part de repérer la cible visuelle 8 à la position cible, et donc de regarder celle-ci, au moins au début, puis de contrôler le déplacement du repère visuel d'orientation 7 en le regardant. Ainsi, si le regard du visage de l'utilisateur devait être orienté dans une direction autre que l'une ou l'autre de ces positions (qui doivent normalement tendre à se rapprocher), une telle singularité constituerait un indice fort de ce que le visage n'est pas authentique.

Par conséquent, l'unité de traitement détermine de préférence, pour la pluralité d'images successives du flux d'images, une direction du regard du visage en identifiant l'orientation des yeux dudit visage, et l'authentification du visage présenté 2 est alors également conditionnée à un regard du visage en direction du repère visuel d'orientation et/ou de la cible visuelle. Si le regard du visage se fait dans une direction trop éloignée du repère visuel d'orientation et/ou de la cible visuelle, le visage présenté 2 n'est pas authentifié. Il est même possible de prendre en compte la corrélation entre le déplacement de la direction du regard du visage et des positions successives du repère visuel d'orientation pour estimer si le suivi du déplacement du repère visuel d'orientation par le regard correspond à un visage authentique.

Par ailleurs, un temps est imparti à l'expiration duquel, en l'absence de coïncidence entre la position du repère visuel d'orientation 7 et la position cible, sinon le visage 2 présenté dans le champ d'acquisition 4 est considéré comme une fraude. Par exemple, ce temps imparti peut être inférieur à 10 secondes, voire inférieur à 5 secondes, compté entre l'apparition de la cible visuelle 8 et la fin du procédé. Ce temps imparti permet de borner temporellement l'exécution du procédé, et permet notamment d'éviter une fraude basée sur la présentation d'une vidéo où un visage effectuerait différentes poses dans l'espoir que l'une d'elles corresponde à la pose cible, en raison du temps nécessaire pour ce faire, d'autant plus si le maintien de la pose cible pendant une durée prédéterminée est requis.

Ainsi, si les conditions d'authentification, incluant une coïncidence de la position du repère visuel d'orientation et de la position cible, sont réunies, l'unité de traitement authentifie le visage présenté 2 (étape S08). L'authentification du visage présenté 2 peut ensuite être utilisée pour poursuivre une identification menée en parallèle.

A l'inverse, si à l'expiration d'un temps imparti les conditions d'authentification n'ont pas été remplies, le visage est considéré comme une fraude. Ainsi, dans l'exemple des figures 5a et 5b, la cible visuelle 8 est disposée en haut à droite de l'image affichée 6. La position de référence, où est initialement positionné le repère visuel d'orientation 7, est centrale, comme la figure 4a. En réponse à l'affichage de l'image affichée 6 par l'écran 5, le visage présenté 2 effectue un changement de pose qui amène le repère visuel d'orientation 7 sur la gauche de l'image affichée 6. Il s'agit de l'emplacement qui était celui de la cible visuelle 8 dans l'exemple des figures 4a et 4b. Il s'agit donc vraisemblablement d'une fraude basée sur la présentation d'une vidéo rejouant une précédente réponse au défi proposé par le procédé.

Néanmoins, comme le positionnement de la cible visuelle 8 change à chaque mise en œuvre du procédé, et qu'il existe une quasi-infinité de positions cibles possibles, la connaissance d'une précédente mise en œuvre du procédé ne permet pas au fraudeur de faire authentifier le visage présenté 2. Dans ce cas, comme le repère visuel d'orientation 7 ne coïncide clairement pas avec la cible visuelle 8, lorsque le temps imparti est écoulé, le défi est considéré comme échoué et le visage 2 présenté dans le champ d'acquisition 4 est considéré comme une fraude.

Dans un tel cas, une alerte à la fraude peut être mise en place, par exemple en empêchant une identification menée en parallèle, et/ou alertant du personnel de sécurité. Il est également possible de prévoir une information de l'utilisateur l'informant de l'échec de l'authentification du visage présenté. S'agissant d'un premier échec, il est possible de remettre en œuvre le procédé afin de donner une seconde chance à l'utilisateur.

L'invention n'est pas limitée au mode de réalisation décrit et représenté aux figures annexées. Des modifications restent possibles, notamment du point de vue de la constitution des divers caractéristiques techniques ou par substitution d'équivalents techniques, sans sortir pour autant du domaine de protection de l'invention.

## Revendications

1.  Procédé d'authentification d'un visage présenté (2) à un terminal (1) comprenant un imageur (3), un écran (5) et une unité de traitement, comprenant les étapes dans lesquelles :

    - l'imageur (3) acquiert (S01) au moins une image initiale d'un visage présenté dans son champ d'acquisition (4),
    - l'unité de traitement détermine une pose du visage à partir de l'image initiale, et à partir de cette pose du visage détermine une pose de référence (S02), une pose du visage étant définie par au moins deux angles représentatifs de l'orientation du visage apparaissant dans une image, et une position cible placée aléatoirement ou pseudo-aléatoirement dans un espace cible (9) à distance d'une position de référence correspondant à la pose de référence, ladite position cible correspondant à une pose cible,
    - l'écran (5) affiche (S03) une image affichée (6) comprenant au moins un repère visuel d'orientation (7) initialement à la position de référence déterminée à partir de la pose du visage dans l'image initiale, et une cible visuelle (8) à la position cible,
    - l'imageur (3) acquiert un flux d'images du visage présenté (2) dans son champ d'acquisition (4), et pour une pluralité d'images successives dudit flux d'images :

        - l'unité de traitement détermine une pose du visage dans chaque image de la pluralité d'images successives,
        - l'unité de traitement détermine (S05) des positions successives du repère visuel d'orientation (7) en fonction des poses du visage successives par rapport à la pose de référence dans la pluralité d'images successives,
        - l'image affichée (6) par l'écran (5) est mise à jour (S06) en déplaçant le repère visuel d'orientation (7) selon ses positions successives déterminées en fonction des poses du visage successives par rapport à la pose de référence dans la pluralité d'images successives,

    - l'unité de traitement authentifie le visage présenté (2) lorsqu'à la suite du déplacement du repère visuel d'orientation, il y a coïncidence de la position du repère visuel d'orientation (7) et de la position cible où se trouve la cible visuelle (8), correspondant à une coïncidence de la pose du visage et de la pose cible, sinon le visage présenté (2) dans le champ d'acquisition (4) est considéré comme une fraude.

2.  Procédé selon la revendication précédente, dans lequel l'espace cible (9) s'étend de part et d'autre de la position de référence.

3.  Procédé selon l'une des revendications précédentes, dans lequel l'espace cible (9) correspond à des plages angulaires des angles de pose définissant une pluralité de positions cibles possibles.

4.  Procédé selon la revendication précédente, dans lequel les angles représentatifs de l'orientation du visage apparaissant dans l'image comprennent un angle de lacet autour d'un axe vertical et un angle d'assiette autour d'un axe horizontal, les plages angulaires s'étendant entre $\pm 10°$ et $\pm 20°$ par rapport aux angles de la pose de référence.

5.  Procédé selon l'une des revendications précédentes, dans lequel l'unité de traitement définit l'espace cible (9) également en fonction de données d'utilisateur et/ou d'éléments contenu dans l'image initiale.

6.  Procédé selon l'une quelconque des revendications précédentes, dans lequel un temps est imparti à l'expiration duquel, en l'absence de coïncidence entre la position du repère visuel d'orientation (7) et la position cible où se trouve la cible visuelle (8), le visage présenté dans le champ d'acquisition est considéré comme une fraude.

7. Procédé selon l'une quelconque des revendications précédentes, dans lequel la coïncidence entre la position du repère visuel d'orientation (7) et la position cible où se trouve la cible visuelle (8) nécessite d'être maintenue pendant une durée prédéterminée avant que l'unité de traitement authentifie le visage.

8. Procédé selon l'une quelconque des revendications précédentes, dans lequel lorsque l'unité de traitement détermine une pose de référence, l'unité de traitement transmet un ordre de mouvement du visage si la pose du visage ne correspond pas à une vue de face du visage.

9. Procédé selon l'une quelconque des revendications précédentes, dans lequel l'authentification du visage présenté (2) est également conditionnée par la détermination de l'aspect tridimensionnel du visage présenté (2) en mettant en oeuvre une technique de reconstruction photogrammétrique basée sur le mouvement à partir d'au moins deux images du visage du flux d'image correspondant à deux poses différentes.

10. Procédé selon l'une quelconque des revendications précédentes, dans lequel l'unité de traitement détermine pour la pluralité d'images successives du flux d'images, une direction du regard du visage en identifiant l'orientation des yeux dudit visage sur les images acquises, l'authentification du visage présenté (2) est également conditionnée à un regard en direction du repère visuel d'orientation et/ou de la cible visuelle.

11. Produit programme d'ordinateur comprenant des instructions de code de programme enregistrées sur un support non transitoire utilisable dans un ordinateur pour l'exécution des étapes d'un procédé selon l'une des revendications précédentes lorsque ledit programme est exécuté sur un ordinateur utilisant ledit support non transitoire.

12. Terminal (1) comprenant un imageur (3), un écran (5) et une unité de traitement, ledit terminal étant configuré pour mettre en oeuvre un procédé selon l'une des revendications 1 à 10.

**Patentansprüche**

1. Verfahren zur Authentifizierung eines präsentierten Gesichts (2) an einem Endgerät (1), umfassend einen Bildaufnehmer (3), einen Bildschirm (5) und eine Verarbeitungseinheit, umfassend die Schritte, in denen:

   - der Bildaufnehmer (3) mindestens ein anfängliches Bild eines präsentierten Gesichts in seinem Bezugsfeld (4) bezieht (S01),
   - die Verarbeitungseinheit eine Pose des Gesichts aus dem anfänglichen Bild bestimmt und aus dieser Pose des Gesichts eine Referenzpose (S02), wobei eine Pose des Gesichts durch mindestens zwei repräsentative Winkel der Ausrichtung des Gesichts, die in einem Bild erscheinen, definiert wird, und eine zufällig oder pseudozufällig platzierte Zielposition in einem Zielraum (9) in einem Abstand von einer Referenzposition, die der Referenzpose entspricht, bestimmt, wobei die Zielposition einer Zielpose entspricht,
   - der Bildschirm (5) ein angezeigtes Bild (6) anzeigt (S03), umfassend mindestens eine visuelle Ausrichtungsmarkierung (7), die anfänglich an der Referenzposition ist, die aus der Pose des Gesichts in dem anfänglichen Bild bestimmt wurde, und ein visuelles Ziel (8) an der Zielposition,
   - der Bildaufnehmer (3) einen Strom von Bildern des präsentierten Gesichts (2) in seinem Bezugsfeld (4) bezieht, und für mehrere aufeinanderfolgende Bilder des Stroms von Bildern:

       - die Verarbeitungseinheit eine Pose des Gesichts in jedem Bild der mehreren aufeinanderfolgenden Bilder bestimmt,
       - die Verarbeitungseinheit aufeinanderfolgende Positionen der visuellen Ausrichtungsmarkierung (7) in Abhängigkeit von aufeinanderfolgenden Posen des Gesichts in Bezug auf die Referenzpose in den mehreren aufeinanderfolgenden Bildern bestimmt (S05),
       - das durch den Bildschirm (5) angezeigte Bild (6) durch Verlagern der visuellen Ausrichtungsmarkierung (7) gemäß seinen aufeinanderfolgenden Positionen, die in Abhängigkeit von aufeinanderfolgenden Posen des Gesichts in Bezug auf die Referenzpose in den mehreren aufeinanderfolgenden Bildern bestimmt wurde, aktualisiert wird (S06),
       - die Verarbeitungseinheit das präsentierte Gesicht (2) authentifiziert, wenn nach der Verlagerung der visuellen Ausrichtungsmarkierung eine Übereinstimmung der Position der visuellen Ausrichtungsmarkierung (7) und der Zielposition, an der sich das visuelle Ziel (8) befindet, vorliegt, entsprechend einer Übereinstimmung der Pose des Gesichts und der Zielpose, andernfalls wird das präsentierte Gesicht (2) in dem Bezugsfeld (4) als ein Betrugsversuch erachtet.

2. Verfahren nach dem vorhergehenden Anspruch, wobei der Zielraum (9) sich zu beiden Seiten der Referenzposition erstreckt.

3. Verfahren nach einem der vorhergehenden Ansprüche, wobei der Zielraum (9) Winkelbereichen von Posewinkeln entspricht, die mehrere mögliche Zielpositionen definieren.

4. Verfahren nach dem vorhergehenden Anspruch, wobei die repräsentativen Winkel der Ausrichtung des Gesichts, die in dem Bild erscheinen, einen Gierwinkel um eine vertikale Achse und einen Neigungswinkel um eine horizontale Achse umfassen, wobei die Winkelbereiche sich zwischen ±10° und ±20° in Bezug auf die Winkel der Referenzpose erstrecken.

5. Verfahren nach einem der vorhergehenden Ansprüche, wobei die Verarbeitungseinheit den Zielraum (9) außerdem in Abhängigkeit von Benutzerdaten und/oder Elementen, die in dem anfänglichen Bild enthalten sind, definiert.

6. Verfahren nach einem der vorhergehenden Ansprüche, wobei eine Zeit vorgegeben wird, bei deren Ablauf bei Fehlen einer Übereinstimmung zwischen der Position der visuellen Ausrichtungsmarkierung (7) und der Zielposition, an der sich das visuelle Ziel (8) befindet, das präsentierte Gesicht in dem Bezugsfeld als ein Betrugsversuch erachtet wird.

7. Verfahren nach einem der vorhergehenden Ansprüche, wobei die Übereinstimmung zwischen der Position der visuellen Ausrichtungsmarkierung (7) und der Zielposition, an der sich das visuelle Ziel (8) befindet, für eine vorherbestimmte Dauer aufrechterhalten werden muss, bevor die Verarbeitungseinheit das Gesicht authentifiziert.

8. Verfahren nach einem der vorhergehenden Ansprüche, wobei, wenn die Verarbeitungseinheit eine Referenzpose bestimmt, die Verarbeitungseinheit eine Bewegungsreihenfolge des Gesichts überträgt, wenn die Pose des Gesichts nicht einer Vorderansicht des Gesichts entspricht.

9. Verfahren nach einem der vorhergehenden Ansprüche, wobei die Authentifizierung des präsentierten Gesichts (2) außerdem durch die Bestimmung des dreidimensionalen Erscheinungsbilds des präsentierten Gesichts (2) durch Durchführen einer photogrammetrischen Rekonstruktionstechnik auf der Basis der Bewegung aus mindestens zwei Bildern des Gesichts des Bildstroms entsprechend zwei unterschiedlichen Posen bedingt wird.

10. Verfahren nach einem der vorhergehenden Ansprüche, wobei die Verarbeitungseinheit für die mehreren aufeinanderfolgenden Bilder des Stroms von Bildern eine Richtung des Blickwinkels des Gesichts durch Identifizieren der Ausrichtung von Augen des Gesichts in den bezogenen Bildern bestimmt, wobei die Authentifizierung des präsentierten Gesichts (2) außerdem von einem Blickwinkel in einer Richtung der visuellen Ausrichtungsmarkierung und/oder des visuellen Ziels bedingt wird.

11. Computerprogrammprodukt, umfassend Programmcodeanweisungen, die auf einem in einem Computer verwendbaren nichtflüchtigen Medium aufgezeichnet sind, zur Ausführung von Schritten eines Verfahrens nach einem der vorhergehenden Ansprüche, wenn das Programm auf einem Computer ausgeführt wird, der das nichtflüchtige Medium verwendet.

12. Endgerät (1), umfassend einen Bildaufnehmer (3), einen Bildschirm (5) und eine Verarbeitungseinheit, wobei das Endgerät zum Durchführen eines Verfahrens nach einem der Ansprüche 1 bis 10 konfiguriert ist.

**Claims**

1. A method for authenticating a face presented (2) to a device (1) comprising an imager (3), a screen (5) and a processing unit, comprising the steps in which:

   - the imager (3) acquires (S01) at least one initial image of a face presented in the acquisition field (4) of the imager,
   - the processing unit determines a pose of the face from the initial image, and from this face pose, determines a reference pose (S02), a face pose being defined by at least two pose angles representative of an orientation of the face appearing in an image, and the processing unit determines a target position placed randomly or pseudo-randomly in a target space (9) at a distance from a reference position corresponding to the reference pose, said target position corresponding to a target pose,

- the screen (5) displays (S03) a displayed image (6) comprising at least one visual orientation mark (7) initially at the reference position determined from the pose of the face in the initial image, and a visual target (8) at the target position,

- the imager (3) acquires a stream of images of the face presented (2) in the acquisition field (4), and for a plurality of successive images of said image stream:

- the processing unit determines a pose of the face in each image of the plurality of successive images,

- the processing unit determines (S05) successive positions of the visual orientation mark (7) according to the successive poses of the face with respect to the reference pose in the plurality of successive images,

- the image displayed (6) by the screen (5) is updated (S06) by moving the visual orientation mark (7) according to the successive positions of the visual orientation mark determined according to the successive poses of the face with respect to the reference pose in the plurality of successive images,

- the processing unit authenticates the presented face (2) when, following the displacement of the visual orientation mark, there is a match between the position of the visual orientation mark (7) and the target position where the visual target (8) is located, corresponding to a match between the face pose and the target pose, otherwise the face presented (2) in the acquisition field (4) is considered as fraud.

2. The method according to the previous claim, wherein the target space (9) extends on either side of the reference position.

3. The method according to one of the previous claims, wherein the target space (9) corresponds to angular ranges of the pose angles defining a plurality of possible target positions.

4. The method according to the previous claims, wherein the angles representative of the orientation of the face appearing in the image comprise a yaw angle about a vertical axis and a pitch angle about a horizontal axis, the angular ranges extending between $\pm 10°$ and $\pm 20°$ with respect to the pose angles of the reference pose.

5. The method according to one of the previous claims, wherein the processing unit defines the target space (9) also according to user data and/or elements contained in the initial image.

6. The method according to one of the previous claims, wherein a time is allotted at the expiry of which, in the absence of match between the position of the visual orientation mark (7) and the target position where the visual target (8) is located, the face presented in the acquisition field is considered as fraud.

7. The method according to one of the previous claims, wherein the match between the position of the visual orientation mark (7) and the target position where the visual target (8) is located, needs to be maintained for a predetermined duration before the processing unit authenticates the face.

8. The method according to one of the previous claims, wherein, when the processing unit determines a reference pose, the processing unit transmits an order of movement of the face if the face pose does not correspond to a front view of the face.

9. The method according to one of the previous claims, wherein the authentication of the presented face (2) is also conditioned by the determination of the three-dimensional appearance of the presented face (2) by implementing a photogrammetric reconstruction technique based on a movement from at least two face images of the image stream corresponding to two different poses.

10. The method according to one of the previous claims, wherein the processing unit determines, for the plurality of successive images of the image stream, a direction of the face gaze by identifying an orientation of the eyes of said face on the acquired images, the authentication of the presented face (2) is also conditioned on a gaze in a direction of the visual orientation mark and/or the visual target.

11. A computer program product comprising program code instructions stored thereon for performing the steps of a method according to claim 1 when said program is executed on a computer reading said non-transitory medium.

12. A device (1) comprising an imager (3), a screen (5) and a processing unit, said device being configured to implement a method according to any one of claim 1 to 10.

## FIG 1

```
┌─────────────────────────────────────────────────────┐
│        Acquisition d'une image du visage             │ ⌇ S01
└─────────────────────────────────────────────────────┘
                          │
                          ▼
┌─────────────────────────────────────────────────────┐
│   Détermination pose de référence et position cible  │ ⌇ S02
└─────────────────────────────────────────────────────┘
                          │
                          ▼
┌─────────────────────────────────────────────────────┐
│           Affichage d'une image affichée             │ ⌇ S03
└─────────────────────────────────────────────────────┘
                          │
                          ▼
┌─────────────────────────────────────────────────────┐
│          Détermination de la pose du visage          │ ⌇ S04
└─────────────────────────────────────────────────────┘
                          │
                          ▼
┌─────────────────────────────────────────────────────┐
│  Détermination position du repère visuel d'orientation │ ⌇ S05
└─────────────────────────────────────────────────────┘
                          │
                          ▼
┌─────────────────────────────────────────────────────┐
│          Mise à jour de l'image affichée             │ ⌇ S06
└─────────────────────────────────────────────────────┘
                          │
                          ▼
```

Coïncidence de la position du repère visuel d'orientation et de la position cible ? ⌇ S07

Non

Oui

```
┌─────────────────────────────────────────────────────┐
│                  Authentification                    │ ⌇ S08
└─────────────────────────────────────────────────────┘
```

# FIG 2

# FIG 3

**FIG 4a**

**FIG 4b**

**FIG 5a**

**FIG 5b**

# EP 3 522 053 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9477829 B

- US 20170124385 A1

**Littérature non-brevet citée dans la description**

- **M. PATACCHIOLA ; A. CANGELOSI.** Head Pose Estimation in the Wild using Convolutional Neural Networks and Adaptive Gradient Methods. *Pattern Récognition,* Novembre 2017, vol. 71, 132-143